(19) Europäisches Patentamt
European Patent Office
Office européen des brevets

(11) Veröffentlichungsnummer: **0 154 152**
**B1**

(12) # EUROPÄISCHE PATENTSCHRIFT

(45) Veröffentlichungstag der Patentschrift: **30.03.88**

(51) Int. Cl.⁴: **G 01 N 31/22**

(21) Anmeldenummer: **85100865.6**

(22) Anmeldetag: **29.01.85**

(54) **Verfahren und Mittel zur Bestimmung von Nitrationen.**

(30) Priorität: **18.02.84 DE 3405912**

(43) Veröffentlichungstag der Anmeldung: **11.09.85 Patentblatt 85/37**

(45) Bekanntmachung des Hinweises auf die Patenterteilung: **30.03.88 Patentblatt 88/13**

(84) Benannte Vertragsstaaten: **BE CH DE FR GB IT LI NL SE**

(56) Entgegenhaltungen:
**US - A - 4 003 706**

**ORGANISCHE REAGENZIEN, 3. Auflage, 1966, E. MERCK, Darmstadt**

(73) Patentinhaber: **Merck Patent Gesellschaft mit beschränkter Haftung, Frankfurter Strasse 250, D-6100 Darmstadt (DE)**

(72) Erfinder: **Bitsch, Roland, Karl-Marx-Strasse 40, D-6102 Pfungstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft ein Verfahren und Mittel zur kolorimetrischen Bestimmung von Nitrationen in wässrigen Lösungen.

Der quantitative Nachweis von Nitrationen gewinnt in der Analytik zunehmend an Bedeutung. Nitrat in Trink- und Brauchwasser, in Lebensmitteln, in der Agrikulturchemie sowie in der allgemeinen Umweltschutzanalytik wird in zunehmendem Masse zu einem allgemeinen Qualitätskriterium. Für die Überwachung der Nitratgrenzwerte in Trinkwasser, der Düngemittelrückstände in Lebensmitteln und die Bestimmung des Nitratspiegels in landwirtschaftlich genutzten Böden zur kosteneffektiven Mineraldüngung werden zuverlässige und rationelle Bestimmungsverfahren benötigt.

Für Nitrationen gibt es relativ wenige Bestimmungsmöglichkeiten. Die einzigen Verfahren von Bedeutung sind kolorimetrischer Art, wobei selbst diese im Vergleich zu den anderen Ionen wenig befriedigend sind.

Im wesentlichen unterscheidet man zwei Verfahren zur Nitrationsbestimmung: die direkte Nitrierung und/oder Oxidation in konzentrierter Schwefelsäure und die Reduktion des Nitrations mit geeigneten Reduktoren zu Nitritionen und deren Nachweis als Azofarbstoff nach der sogenannten Griess-Reaktion.

Oxidationsreaktionen mit Anthranilsäure (tiefblaue Lösung), Brucin (oranges Produkt) oder Diphenylamin (blaues Produkt) weisen den Vorteil eines deutlichen Reaktionskontrasts auf, haben jedoch den Nachteil der geringen Selektivität, da weitere Ionen, z. B. Chlorid im Seewasser, unter diesen Bedingungen ebenfalls oxidierend wirken. Nitrierungsreaktionen von Phenolen führen zu gelben Nitrophenolen. Der höheren – wenn auch immer noch für die Praxis kaum ausreichenden – Selektivität stehen hier die gelben Reaktionsfarben entgegen, deren Intensitätsunterschiede das Auge nur schwer differenzieren kann.

In Lange/Vejdelek, Photometrische Analyse, Verlag Chemie Weinheim, 7. Auflage, 1980, Seite 365, ist eine Methode zur Bestimmung von Nitraten mit Natriumsalicylat beschrieben, wobei die gelbe 5-Nitrosalicylsäure photometrisch bestimmt wird. Störende Kationen müssen mit einer Ionenaustauschersäule abgetrennt werden, Nitrite verstärken, Bromide und Jodide vermindern die Farbintensität. Die Bestimmung ist sehr aufwendig; die Probe mit dem Reagenz muss bei 100–120 °C zur Trockne abgedampft und getrocknet werden. Nach dem Abkühlen wird der Rückstand mit 96%iger Schwefelsäure versetzt, und nach Zugabe von Wasser, Alkalilösung und Auffüllung mit Wasser im Messkolben kann nach einer Standzeit von 20 Minuten die Bestimmung durchgeführt werden.

Die bekannten Methoden benötigen einen erheblichen apparativen und zeitlichen Aufwand, sie sind mehr oder weniger störanfällig oder für die praktischen Anforderungen zu empfindlich.

Der Erfindung lag deshalb die Aufgabe zugrunde, ein stabiles, empfindliches Reagenz und ein Verfahren zur Bestimmung von Nitrationen zur Verfügung zu stellen, mit dem eine direkte Bestimmung ohne besondere Vorbehandlung der Probe möglich ist und mit dem geringe Nitratgehalte sicher und reproduzierbar erfasst werden können.

Überraschenderweise wurde gefunden, dass bestimmte Benzoesäurederivate mit Nitrationen in Gegenwart konzentrierter Schwefelsäure Farbreaktionen geben, die den gleichzeitigen Anforderungen an Reaktionskontrast und Einfachheit in der Durchführung gerecht werden. Im Vergleich zu den bekannten Methoden ist für die Reproduzierbarkeit der Messung eine exakte Temperierung des Messansatzes nicht erforderlich; das Maximum der optischen Dichte ist bereits nach einigen Minuten erreicht und für Stunden konstant; Art und Dauer der Reagenziendurchmischung haben keinen Einfluss auf die Messwerte.

Gegenstand der Erfindung ist ein Verfahren zur kolorimetrischen Bestimmung von Nitrationen durch Vermischen der zu untersuchenden Probe mit konzentrierter Schwefelsäure und Zugabe eines die Farbgebung auslösenden Reagenzes, das dadurch gekennzeichnet ist, dass man als Reagenz eine Verbindung der allgemeinen Formel

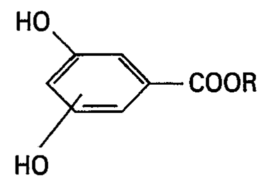

zusetzt, worin R = H, ein Äquivalent eines Kations oder Alkyl mit 1 bis 6 C-Atomen bedeutet.

Ein weiterer Gegenstand der Erfindung ist ein Mittel zur Durchführung dieses Verfahrens, das dadurch gekennzeichnet ist, dass es als Reagenz eine Verbindung der allgemeinen Formel

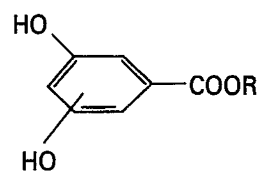

enthält, worin R = H, ein Äquivalent eines Kations oder Alkyl mit 1 bis 6 C-Atomen bedeutet. Geeignete Reagenzien sind die 3,5- und 2,5-Dihydroxybenzoesäure sowie deren Salze mit Alkalimetallionen, einem Äquivalent Erdalkalimetallionen bzw. Metallionen, die mit Schwefelsäure weder Fällungen noch Färbungen erzeugen, wie Li, Na, K, Rb, Cs, Mg, Zn, $NH_4$ sowie die entsprechenden Ester der Dihydroxybenzoesäure mit Alkoholen mit 1 bis 6 C-Atomen, die auch verzweigt sein können. Der Rest R ist demnach z. B. Alkyl wie Methyl, Ethyl, Propyl, i-Propyl, Butyl, i-Butyl, Pentyl, i-Pentyl, Hexyl, i-Hexyl. Bevorzugt ist die 3,5-Dihydroxybenzoesäure.

Die Konzentrationen des Reagenzes sind in weiten Bereichen variabel. Zu geringe Dosierungen des Reagenzes führen zwar zu farblosen Blindwerten, aber in Gegenwart von Nitrationen zu einer nur kurzfristig stabilen roten Farbe. Reproduzierbare Nitratbestimmungen erfordern einen Überschuss an Reagenz, was jedoch einen leicht hellbraunen Blindwert zur Folge hat. Die zulässige Obergrenze der Reagenzkonzentration wird dabei durch die Löslichkeit bestimmt. Die geeigneten Reagenzkonzentrationen liegen im Bereich von etwa 0,1 bis 1,0 Gew.-% im Messansatz. Im Falle von 3,5-Dihydroxybenzoesäure eignet sich eine Konzentration von etwa 0,2 bis 1,0, vorzugsweise 0,6 Gew.-% im Messansatz.

Die Farbreaktion wird bei einer Schwefelsäurekonzentration von etwa 81 bis 86 Gew.-%, vorzugsweise von etwa 83 bis 84 Gew.-% im Messansatz durchgeführt. Höhere oder niedrigere Konzentrationen ergeben schwächere Farben. Anstelle der Schwefelsäure kann auch ein Gemisch von Schwefelsäure und Phosphorsäure verwendet werden.

Die Bestimmung von Nitrationen erfolgt in der Weise, dass man das Reagenz in konzentrierter Schwefelsäure löst, die zu untersuchende Probelösung hinzufügt und durchmischt. Es ist auch möglich, zunächst das Reagenz und anschliessend die Schwefelsäure zur Probelösung zu geben. Bereits nach einigen Minuten ist die Reaktion abgelaufen und kann entweder visuell anhand einer Farbskala oder auch photometrisch ausgewertet werden.

Man erhält eine optisch sehr gut differenzierbare Farbabstufung von Hellbraun bis tief Weinrot, wenn die Nitrationen in einem Konzentrationsbereich von etwa 10 bis 100 mg/l in der zu untersuchenden Probelösung vorliegen. Die Farbe der Lösung ist über mindestens 4 Stunden photometrisch stabil. Der z.B. bei der Analyse von Trinkwasser oder von Wässern aus Industriegegenden interessierende Konzentrationsbereich liegt zwischen 10 und 200 ppm Nitrationen im Wasser. Durch Variation der Küvettenschichtlänge kann der Messbereich nach oben oder unten verschoben werden.

Beispiel

70 mg 3,5-Dihydroxybenzoesäure werden in 5 ml 96%iger Schwefelsäure gelöst. In diese Lösung werden 1,5 ml Probelösung einpipettiert, die zwischen 10 und 100 mg/l Nitrationen enthalten kann. Die Mischung erwärmt sich auf ca. 90–100°C.

Nach 2 bis 3 min ist, je nach dem Nitrationengehalt, eine deutliche Farbabstufung von schwachem Hellbraun bis Tiefrot zu erkennen, die anhand einer Skala mit abgestuften Farbwerten eindeutig dem entsprechenden Nitrationengehalt zugeordnet werden kann. Analoge Ergebnisse werden erzielt, wenn anstelle von 3,5-Dihydroxybenzoesäure die 2,5-Dihydroxybenzoesäure zugesetzt wird. Die Farbabstufung verläuft in diesem Fall von Hellbraun nach Orangegelb.

Zur spektrophotometrischen Auswertung wird die Reaktion im Falle der 3,5-Dihydroxybenzoesäure in einer Küvette von 10 mm Schichtdicke bei 525 nm im Spektrophotometer gegen eine gleichzeitig zubereitete Blindprobe gemessen. Bei Verwendung von 2,5-Dihydroxybenzoesäure erfolgt die Messung bei 420 nm. Die Konzentration an Nitrationen wird anhand des gemessenen Extinktionswertes an einer zuvor mit Nitrationen enthaltenden Lösungen genau bekannten Gehaltes erstellten Eichkurve abgelesen.

**Patentansprüche**

1. Verfahren zur kolorimetrischen Bestimmung von Nitrationen durch Vermischen der zu untersuchenden Probe mit kozentrierter Schwefelsäure und Zugabe eines die Farbgebung auslösenden Reagenzes, dadurch gekennzeichnet, dass man als Reagenz eine Verbindung der allgemeinen Formel

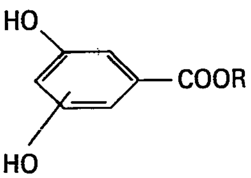

zusetzt, worin R = H, ein Äquivalent eines Kations oder Alkyl mit 1 bis 6 C-Atomen bedeutet.

2. Verfahren nach Anspruch 1, dadurch gekennzeichnet, dass man als Reagenz 3,5-Dihydroxybenzoesäure zusetzt.

3. Verfahren nach den Ansprüchen 1 und 2, dadurch gekennzeichnet, dass die Schwefelsäure in einer Konzentration von 81–86 Gew.-% im Messansatz eingesetzt wird.

4. Mittel zur Durchführung des Verfahrens nach Anspruch 1, dadurch gekennzeichnet, dass es als Reagenz eine Verbindung der allgemeinen Formel

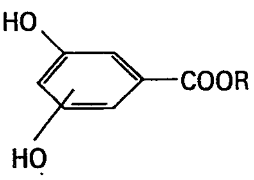

enthält, worin R = H, ein Äquivalent eines Kations oder Alkyl mit 1 bis 6 C-Atomen bedeutet.

5. Mittel nach Anspruch 4, dadurch gekennzeichnet, dass es im Messansatz 0,1 bis 1,0 Gew.-% des Reagenzes enthält.

**Claims**

1. Procedure for the colorimetric determination of nitrate ions by mixing the sample which is to be investigated with concentrated sulphuric acid and addition of a reagent which initiates the colour production, characterised in that the reagent added is a compound of the general formula

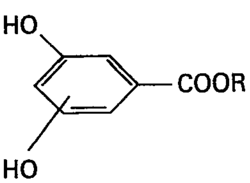

in which R is H, one equivalent of a cation, or alkyl having 1 to 6 C atoms.

2. Procedure according to claim 1, characterised in that the reagent added is 3,5-dihydroxybenzoic acid.

3. Procedure according to claims 1 and 2, characterised in that the sulphuric acid is used at a concentration of 81–86% by weight in the measurement mixture.

4. Agent for carrying out the procedure according to claim 1, characterised in that it contains as the reagent a compound of the general formula

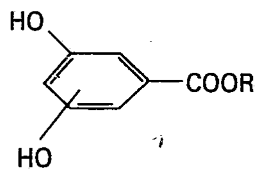

in which R is H, one equilvalent of a cation, or alkyl having 1 to 6 C atoms.

5. Agent according to claim 4, characterised in that it contains in the measurement mixture 0.1 to 1.0% by weight of the reagent.

**Revendications**

1. Procédé de détermination colorimétrique d'ions nitrate par mélange de l'échantillon à examiner avec de l'acide sulfurique concentré et addition d'un réactif déclenchant la coloration, caractérisé en ce qu'on ajoute comme réactif un composé de formule générale

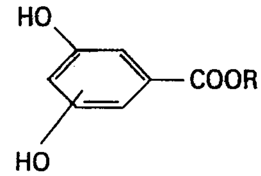

dans laquelle R = H, un équivalent d'un cation ou un alcoyle en $C_1$ à $C_6$.

2. Procédé selon la revendication 1, caractérisé en ce qu'on ajoute comme réactif l'acide 3,5-dihydroxybenzoïque.

3. Procédé selon les revendications 1 et 2, caractérisé en ce qu'on utilise l'acide sulfurique à une concentration de 81–86% en poids dans la charge mesurée.

4. Agent pour réaliser le procédé selon la revendication 1, caractérisé en ce qu'il contient comme réactif un composé de formule générale

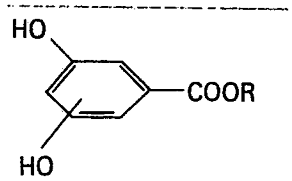

dans laquelle R = H, un équivalent d'un cation ou un alcoyle en $C_1$ à $C_6$.

5. Agent selon la revendication 4, caractérisé en ce qu'il contient dans la charge mesurée de 0,1 à 1,0% en poids de réactif.